# EUROPEAN PATENT APPLICATION

(11) **EP 2 942 101 A1**
(43) Date of publication of application: **11.11.2015**
(21) Application number: 14753642.9
(22) Date of filing: 18.02.2014
(51) Int. Cl.: B01J 35/02, B01J 19/24, F28F 1/30

(54) **CATALYTIC REACTOR AND METHOD FOR MANUFACTURING CATALYTIC REACTOR**

(30) Priority: 22.02.2013 JP 2013033775
(71) Applicant: Sumitomo Precision Products Co., Ltd., Hyogo 660-0891 (JP)
(72) Inventor: FUJITA, Yasuhiro, Amagasaki-shi Hyogo 660-0891 (JP); DOMOTO, Koji, Amagasaki-shi Hyogo 660-0891 (JP)
(74) Representative: Delorme, Nicolas
(86) International application number: PCT/JP2014/000824
(87) International publication number: WO 2014/129176

(57) **Abstract**

In a catalytic reactor including catalyst carriers inserted into a plurality of channels defined by a corrugated fin, one end of the corrugated fin is located halfway on a horizontal wall, and a vertical wall of the corrugated fin adjacent to a side bar is arranged to provide a space where one of the catalyst carriers is insertable between the side bar and the vertical wall. An end portion of the corrugated fin in a second direction is brazed to a tube plate between the side bar and the vertical wall of the corrugated fin.

## Description

### TECHNICAL FIELD

The present disclosure relates to a catalytic reactor including catalyst carriers inserted into respective channels defined by corrugated fins, and a method for making such a catalytic reactor.

### BACKGROUND ART

Patent Document 1 describes a catalytic reactor in which the structure of a plate fin heat exchanger is used. This catalytic reactor is configured such that corrugated fins are arranged in respective passages defined by tube plates and brazed to constitute a core, and catalyst carriers are inserted into a plurality of channels defined by the corrugated fins, and is also configured such that a catalytic reaction is caused when a fluid flows through the channels. In the following description, the terms "catalytic reactor" and "core" will sometimes be used as synonyms.

### CITATION LIST

### PATENT DOCUMENT

PATENT DOCUMENT 1: Japanese Unexamined Patent Publication No. 2011-62618
PATENT DOCUMENT 2: Japanese Unexamined Patent Publication No. 2002-71288

### SUMMARY OF THE INVENTION

### TECHNICAL PROBLEM

In a plate fin heat exchanger, a side portion of a passage defined by tube plates facing each other is formed by a side bar arranged between the tube plates. Meanwhile, an end of a corrugated fin adjacent to the side bar may be defined by cutting halfway an upper or lower wall constituting a crest or trough of the corrugated fin. However, cutting at such a halfway point may cause the end portion of the corrugated fin to be caught in the gap between the tube plates and the side bar when the tube plates, the corrugated fin, and the side bar are stacked one upon the other and brazed together.

To solve this problem, the end of a corrugated fin does not have to be defined by cutting the upper or lower wall of the corrugated fin halfway but may be defined by cutting halfway a side wall connecting the crest and trough of the corrugated fin together as illustrated in FIG. 2 of Patent Document 2, for example. This allows the end portion of the corrugated fin to contact with at least a side wall surface of the side bar, thus preventing the end portion of the corrugated fin from being caught in the gap between the tube plate and the side bar.

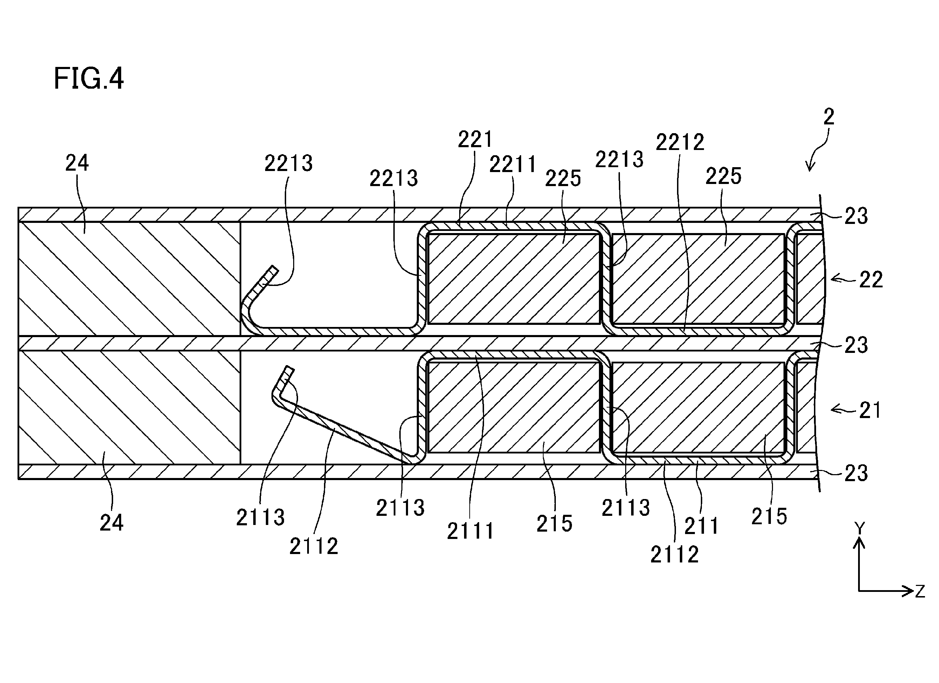

However, the present inventors discovered that if such a technique as the one described in Patent Document 2 was applied to a catalytic reactor, the following problem could occur. Specifically, as illustrated in FIG. 4 by way of example, when the corrugated fins 211 and 221 and other members are brazed together, the side bar 24 and the end portion of the corrugated fin 211, 221 (i.e., the side wall 2113 or 2213) contact with each other in a horizontal direction orthogonal to the stacking direction of a core 2. Thus, the influence of thermal deformation and other inconveniences caused during the brazing process may cause the side wall 2213 of the corrugated fin 221 to be bent inward in the passage, or may cause the lower wall 2112 of the corrugated fin 211 to be bent upward so that the side wall 2113 thereof shifts vertically. In addition, the stress built up when the end portion of the corrugated fin 211, 221 is defined by cutting may be released during brazing, and the end portion of the corrugated fin 211, 221 may also be deformed. While such a deformation is not particularly a problem in the plate fin heat exchanger, it unfortunately becomes difficult to appropriately insert catalyst carriers 215, 225 formed in the form of a bar, for example, into channels of the catalytic reactor. The reason is that the cross-sectional shape of a channel formed between the side bar 24 and the side wall 2113, 2213 of the corrugated fin 211, 221 is distorted. That is to say, a catalyst carrier of such a size that allows itself to be inserted into the channel with a distorted cross-sectional shape may be separately provided and inserted into this channel. In such a situation, however, a space where no catalyst carrier exists is created in a cross section of this channel. This causes a non-uniform flow, i.e., a situation where a relative decrease in the resistance of this channel leads to a relative increase in the flow rate through the channel, and also causes a decline in performance, i.e., a situation where a fluid flows through the space where no catalyst carrier exists in this channel and thus passes through the core 2 without causing any catalytic reaction.

In view of the foregoing background, it is therefore an object of the present disclosure to avoid such a decline in the performance of a catalytic reactor, including catalyst carriers inserted into a plurality of channels defined by corrugated fins, by reliably securing a cross section, which is wide enough to allow the catalyst carrier to be inserted, for the channel formed between the end portion of each corrugated fin and the side bar.

### SOLUTION TO THE PROBLEM

An aspect of the present disclosure relates to a catalytic reactor. This catalytic reactor includes: tube plates configured to face each other in a first direction with a predetermined gap left between themselves and to define a passage where a fluid flows between themselves; a corrugated fin brazed in the passage defined by the tube plates and configured to partition the passage into a plurality of channels in a second direction orthogonal to the first direction; a side bar brazed between the tube plates facing each other, and adjacent to an end portion of the corrugated fin in the second direction so as to constitute a side wall of the passage; and catalyst carriers configured to be inserted into, and extend along, the plurality of channels defined by the corrugated fin.

The corrugated fin includes horizontal walls brazed to the tube plates facing each other in the first direction, and vertical walls arranged in the second direction at predetermined equal pitches corresponding to a dimension of the catalyst carriers. One end of the corrugated fin in the second direction is located halfway on one of the horizontal walls. One of the vertical walls of the corrugated fin that is adjacent to the side bar is arranged to provide a space where one of the catalyst carriers is insertable between the side bar and that vertical wall of the corrugated fin, and the end portion of the corrugated fin in the second direction is brazed to one of the tube plates between the side bar and that vertical wall of the corrugated fin.

According to this configuration, the end of a corrugated fin, including horizontal walls and vertical walls, in a second direction (i.e., the direction orthogonal to a first direction in which tube plates face each other) is located halfway on one of the horizontal walls.

One of the vertical walls of the corrugated fin that is adjacent to a side bar is arranged to provide a space where one of catalyst carriers is insertable between the side bar and that vertical wall of the corrugated fin.

Also, the end portion of the corrugated fin in the second direction is brazed to one of the tube plates between the side bar and that vertical wall of the corrugated fin. This prevents that end portion from being deformed and separated from the tube plate and distorting the cross-sectional shape of the channel defined between the side bar and that vertical wall of the corrugated fin.

Providing a sufficient space between the side bar and the vertical wall of the corrugated fin and preventing the cross-sectional shape of the channel from being distorted in combination allow for inserting the catalyst carrier as designed into the channel adjacent to the side bar. Thus, this catalytic reactor is allowed to achieve its expected performance with reliability, since the fluid passing through the channel constantly causes a catalytic reaction as expected.

Here, the interval between the side bar and that vertical wall of the corrugated fin may be set to be different from the predetermined pitches of the corrugated fin. In other words, the interval may be greater or less than the predetermined pitches. In this case, a catalyst carrier having a dimension corresponding to the interval is inserted into the channel defined between the side bar and that vertical wall of the corrugated fin. This catalyst carrier has different dimensions from any of the catalyst carriers inserted into the other channels.

Alternatively, the interval between the side bar and that vertical wall of the corrugated fin may be set to be equal to the predetermined pitches of the corrugated fin, and a catalyst carrier having the same dimensions as the catalyst carriers inserted between the vertical walls of the corrugated fin may be inserted between the side bar and that vertical wall of the corrugated fin.

According to such an embodiment, catalyst carriers having the same dimensions may be prepared and inserted into all of those channels. This helps reduce the manufacturing cost.

Another aspect of the present disclosure relates to a method for making a catalytic reactor. This method includes steps of: cutting, to a predetermined size, a corrugated fin, including horizontal walls and vertical walls, halfway on one of the horizontal walls; sandwiching the corrugated fin thus cut between tube plates in a direction in which the horizontal walls are in contact with the tube plates, arranging a side bar between the tube plates so that the tube plate is adjacent to one of the vertical walls in an end portion of the corrugated fin, and brazing the corrugated fin, the tube plates, and the side bar together; interposing, during the step of brazing, a spacer between the side bar and one of the vertical walls of the corrugated fin that is adjacent to the side bar to provide a predetermined space between the side bar and the vertical wall; and inserting, after the step of brazing, a catalyst carrier into a channel defined between the vertical walls of the corrugated fin, and also inserting another catalyst carrier into another channel which is defined between the side bar and that vertical wall of the corrugated fin and from which the spacer has been removed.

When tube plates, a corrugated fin, and a side bar are brazed together, a spacer is arranged between the side bar and an adjacent one of the vertical walls at an end portion of the corrugated fin, thereby reliably providing a predetermined interval there. In addition, the end portion of the corrugated fin is reliably prevented from being caught in the gap between the side bar and the tube plate. The spacer just needs to be a material that is not brazed to any of the side bar, corrugated fin, and tube plates in the brazing step, and for example, may be a slim ceramic bar.

After the tube plates, corrugated fin, and side bar have been brazed together in such a manner, the spacer is removed, and the catalyst carrier is inserted into the space from which the spacer has been removed (i.e., the channel defined by the side bar and that vertical wall of the corrugated fin). By using the spacer, the channel defined between the side bar and that vertical wall of the corrugated fin comes to have a cross section that is wide enough to allow the catalyst carrier to be inserted as described above. Thus, the spacer preferably has a cross section with substantially the same dimensions as the catalyst carrier. This ensures the insertion of the catalyst carrier. In this manner, the catalyst carriers having a predetermined shape are insertable into all of the channels. Consequently, a high-performance catalytic reactor is provided.

Here, the brazing step may be performed with the corrugated fin arranged such that an end of the corrugated fin is out of contact with the side bar. This reliably prevents the side bar from pressing the end portion of the corrugated fin under the influence of heat generated by brazing. As a result, the end portion of the corrugated fin (i.e., a portion of the horizontal wall in contact with the tube plate) is reliably brazed to the tube plate between the side bar and that vertical wall of the corrugated fin. This prevents the cross-sectional shape of the channel defined between the side bar and that vertical wall of the corrugated fin from being distorted, and ensures the insertion of the catalyst carrier having the predetermined shape into this channel. As a result, a high-performance catalytic reactor is provided.

### ADVANTAGES OF THE INVENTION

As can be seen from the foregoing description, according to the catalytic reactor, the catalyst carrier is also insertable into the channel defined between the side bar and that vertical wall of the corrugated fin, thereby helping ensure the expected performance of the catalytic reactor. In addition, according to the method for making a catalytic reactor, the use of the spacer ensures the insertion of the catalyst carrier having a predetermined shape into the channel defined between the side bar and that vertical wall of the corrugated fin, thus allowing for making a high-performance catalytic reactor.

### BRIEF DESCRIPTION OF THE DRAWINGS

[FIG. 1] FIG. 1 is a partially cutaway, front view illustrating a general configuration for a catalytic reactor.
[FIG. 2] FIG. 2 is a cross-sectional view taken along the plane II-II in FIG. 1.
[FIG. 3] FIG. 3 is a view illustrating a structure of a catalytic reactor being manufactured, and corresponding to FIG. 2.
[FIG. 4] FIG. 4 is a view illustrating an exemplary configuration for a catalytic reactor made by a conventional manufacturing method, and corresponding to FIG. 2.

### DESCRIPTION OF EMBODIMENTS

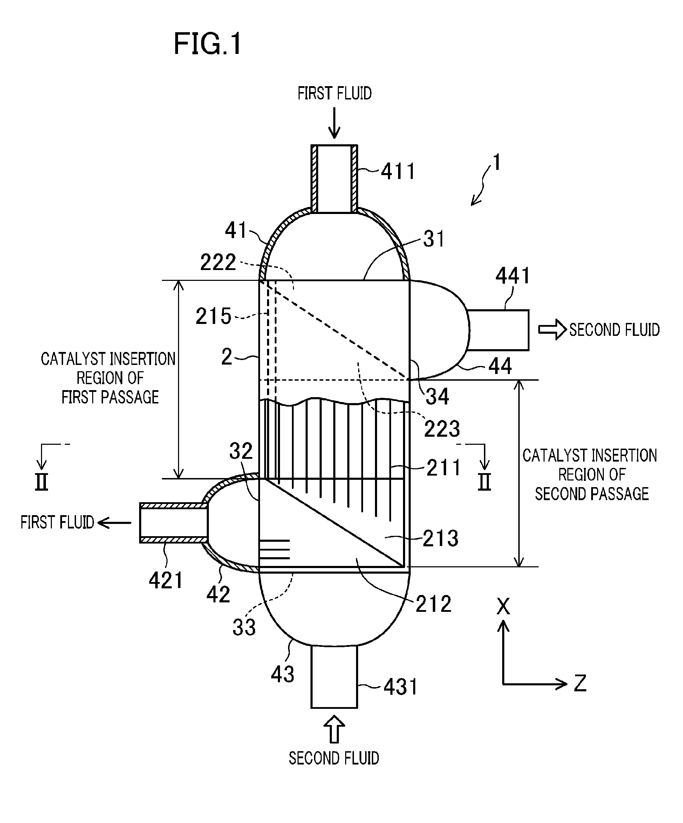

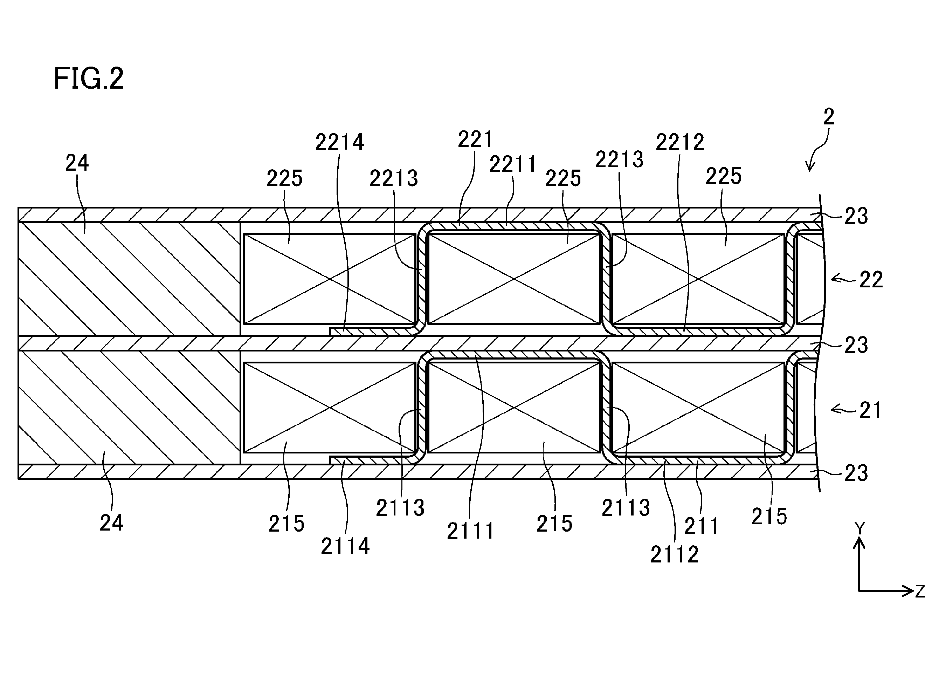

Embodiments of a catalytic reactor will now be described with reference to the drawings. Note that the following embodiments are preferred examples. FIG. 1 illustrates a general configuration for a catalytic reactor 1 according to an embodiment, and FIG. 2 illustrates a part of the cross section taken along the plane II-II in FIG. 1. For the sake of convenience of explanation, the upward/downward direction on the paper on which FIG. 1 is drawn will be hereinafter referred to as an "X direction", the rightward/leftward direction there will be hereinafter referred to as a "Z direction", and the direction coming out of the paper will be hereinafter referred to as a "Y direction". Also, in each drawing, the upper side of the paper may be hereinafter referred to as "up", and the lower side thereof may be hereinafter referred to as "down". However, the terms "up" and "down" in the following description may not respectively correspond to the upper and lower sides of an actual catalytic reactor.

This catalytic reactor 1 includes a core 2 having basically the same structure as a plate fin heat exchanger. The core 2 includes a plurality of first passages 21 through which a first fluid flows, and a plurality of second passages 22 through which a second fluid flows. As partially illustrated in FIG. 2, the first and second passages 21 and 22 are alternately stacked in the Y direction as a first direction with tube plates 23 interposed between them. Note that FIG. 2 illustrates only one of the first passages 21 and only one of the second passages 22. A side portion of each of the first and second passages 21 and 22 in the Z direction as a second direction is defined by a side bar 24.

As indicated by the solid arrows in FIG. 1, the first fluid flows into the first passages 21 through the upper end face of the core 2, flows downward through the core 2, and then flows out in the Z direction through a side surface of the core 2 at a lower end portion thereof. As indicated by the hollow arrows in FIG. 1, the second fluid flows into the core 2 through the lower end face thereof, flows upward through the core 2, and then flows out in the Z direction through a side surface of the core 2 at an upper end portion thereof. As can be seen from the foregoing description, the core 2 is configured as a counter-flow type, through which the first and second fluids flow in the two opposite X directions. Note that this configuration for the core 2 is merely an example of the present disclosure. Alternatively, the core 2 may also be a parallel-flow type designed such that the flow directions of the first and second fluids are parallel to each other, or a cross-flow type through which the first and second fluids flow in directions orthogonal to each other.

As illustrated in FIG. 2, each of the first passages 21 of the core 2 includes a corrugated fin 211. The corrugated fin 211 partitions the first passage 21 into a plurality of channels arranged in the Z direction and extending in the X direction. Likewise, each of the second passages 22 also includes a corrugated fin 221, and the corrugated fin 221 also partitions the second passage 22 into a plurality of channels arranged in the Z direction and extending in the X direction. The corrugated fin 211 arranged in the first passage 21 includes upper and lower walls 2111 and 2112, each being in contact with one of the tube plates 23, and side walls 2113 extending straight in the Y direction to connect the upper and lower walls 2111 and 2112 together. The corrugated fin 221 arranged in the second passage 22 includes upper and lower walls 2211 and 2212, each being in contact with one of the tube plates 23, and side walls 2213 extending straight in the Y direction to connect the upper and lower walls 2211 and 2212 together. The upper walls 2111 and 2211 and the lower walls 2112 and 2212 correspond to the horizontal walls, and the side walls 2113 and 2213 correspond to the vertical walls. The first and second passages 21 and 22 each have channels, each of which is defined by one of the upper walls 2111 and 2211 or one of the lower walls 2112 and 2212, two of the side walls 2113 and 2213, and one of the tube plates 23 and which has a substantially rectangular cross section. Note that the cross-sectional shape of each channel is merely an example of the present disclosure and may be any other appropriate one.

As conceptually illustrated in FIG. 1, a distributor fin 212 cut into a triangular shape is arranged around an outlet portion of each first passage 21 corresponding to a lower end portion of the core 2. The distributor fin 212 changes the direction of flow through the first passage 21 from the downward X direction to one horizontal Z direction (the leftward direction on the paper of FIG. 1). A distributor fin 222 cut into a triangular shape is also arranged around an outlet portion of each second passage 22 corresponding to an upper end portion of the core 2. The distributor fin 222 changes the direction of flow through the second passage 22 from the upward X direction to the other horizontal Z direction (the rightward direction on the paper of FIG. 1). Thus, the upper end face of the core 2 defines an inflow surface 31 thereof through which the first fluid flows into the core 2, and the side surface of a lower portion of the core 2 defines an outflow surface 32 thereof through which the first fluid flows out of the core 2. On the other hand, the lower end face of the core 2 defines an inflow surface 33 thereof through which the second fluid flows into the core 2, and the side surface of an upper portion of the core 2 defines an outflow surface 34 thereof through which the second fluid flows out of the core 2.

On the inflow surface 31 through which the first fluid flows into the core 2, an inflow header tank 41 is attached to the core 2 in order to distribute the first fluid into the channels of each first passage 21. An inflow nozzle 411 through which the first fluid flows in is attached to the inflow header tank 41. On the other hand, on the outflow surface 32 through which the first fluid flows out of the core 2, an outflow header tank 42 is attached to the core 2 in order to collect the first fluid that has passed through the channels of each first passage 21 and to allow the collected first fluid to flow out. An outflow nozzle 421 through which the first fluid flows out is attached to the outflow header tank 42. An inflow header tank 43 is attached to the inflow surface 33 through which the second fluid flows in, and an outflow header tank 44 is attached to the outflow surface 34 through which the second fluid flows out. The inflow header tank 43 and outflow header tank 44 for the second fluid respectively have the same configuration as the inflow header tank 41 and outflow header tank 42 for the first fluid. An inflow nozzle 431 and an outflow nozzle 441 are attached to the inflow header tank 43 and outflow header tank 44, respectively.

The first corrugated fin 211 in the first passage 21 is configured such that its upper and lower ends are orthogonal to the flow direction of the fluid (i.e., the X direction). A second corrugated fin 213 is arranged between this first corrugated fin 211 and the distributor fin 212.

The second corrugated fin 213 is a fin cut into a triangular shape just like the distributor fin 212, and is configured to partition the first passage 21 into a plurality of channels arranged in the Z direction just like the first corrugated fin 211. This second corrugated fin 213 is arranged to adjoin the first corrugated fin 211, thereby making the channels in the first passage 21 continuous in the X direction.

The first corrugated fin 221 in the second passage 22 is also configured such that its upper and lower ends are orthogonal to the flow direction of the fluid (i.e., the X direction), and although not shown in detail, a second corrugated fin 223 cut into a triangular shape is arranged between the first corrugated fin 221 and the distributor fin 222.

In addition, in the catalytic reactor 1, a catalyst carrier 215 is inserted into each channel in the first passages 21. As conceptually illustrated in FIGS. 1 and 2, the catalyst carrier 215 extends in the X direction, is in the shape of a square bar having a cross section corresponding to the cross-sectional shape of the channel, and extends over the entire first corrugated fin 211 from one end through the other end thereof (see the "Catalyst Insertion Region of First Passage" in FIG. 1). Note that FIG. 1 illustrates only one catalyst carrier 215 for ease of understanding. Likewise, a square-bar-shaped catalyst carrier 225 extending in the X direction is also inserted into each channel in the second passages 22 (see FIG. 2). In each second passage 22, the catalyst carrier 225 also extends over the entire first corrugated fin 221 from one end through the other end thereof (see the "Catalyst Insertion Region of Second Passage" in FIG. 1), and the interaction of two catalytic reactions is expected in the region where catalyst insertion regions of the first and second passages 21 and 22 overlap with each other. Each catalyst carrier 215, 225 just needs to have a cross-sectional shape corresponding to that of the channel. Although not shown, if the cross-sectional shape of the channel is, for example, trapezoidal, the cross-sectional shape of the catalyst carrier 215, 225 just needs to be trapezoidal, too, and if the cross-sectional shape of the channel is, for example, square, the cross-sectional shape of the catalyst carrier 215, 225 just needs to be square, too.

Next, it will be described in detail with reference to FIG. 2 what structure the catalyst insertion regions of the first and second passages 21 and 22 have in their side portion in the Z direction. First, one end of the first corrugated fin 211, 221 is defined by cutting one of the lower walls 2112, 2212 halfway. Instead of cutting one of the lower walls 2112, 2212 halfway, one of the upper walls 2111, 2211 may be cut halfway. The end of the first corrugated fin 211, 221 defined by cutting the lower wall 2112, 2212 halfway is not in contact with the side bar 24. The end portion 2114, 2214 of the first corrugated fin 211, 221 is brazed to the tube plate 23 in the space between the side bar 24 and the side wall 2113, 2213 of the first corrugated fin 211, 221 adjacent to the side bar 24.

The interval between the side bar 24 and the side wall 2113, 2213 of the first corrugated fin 211, 221 adjacent thereto (i.e., the distance in the Z direction between them) is set to be a predetermined one. This predetermined interval is the one allowing the insertion of the catalyst carrier 215, 225. Specifically, in the example shown in FIG. 2, the interval between the side bar 24 and the side wall 2113, 2213 is set to be exactly or nearly equal to the pitch between the side walls 2113, 2213 of the first corrugated fin 211, 221. Thus, a catalyst carrier 215, 225, having the same dimensions as the catalyst carriers 215, 225 inserted into the respective channels defined in the Z direction by the side walls 2113, 2213 of the first corrugated fin 211, 221 is also insertable into the channel defined between the side bar 24 and the side wall 2113, 2213.

Next, it will be described with reference to the drawings how to make a core 2 with such a configuration. First, although not shown, corrugated fins 211, 212, 213, 221, 222, and 223 are each formed by cutting a corrugated fin into a predetermined shape. At this time, each of the first corrugated fins 211, 221, in particular, defining a catalyst insertion region in which catalyst carriers 215, 225 are arranged, has its end defined by cutting an upper wall 2111, 2211 or a lower walls 2112, 2212 at a halfway point as described above. As will be described later, the halfway point of the upper wall 2111, 2211 or the lower wall 2112, 2212 just needs to be appropriately set to provide a predetermined interval between a side bar 24 and the side wall 2113, 2213 of the corrugated fin 211, 221 adjacent thereto and to prevent the end of the corrugated fin 211, 221 thus cut from contacting with the side bar 24.

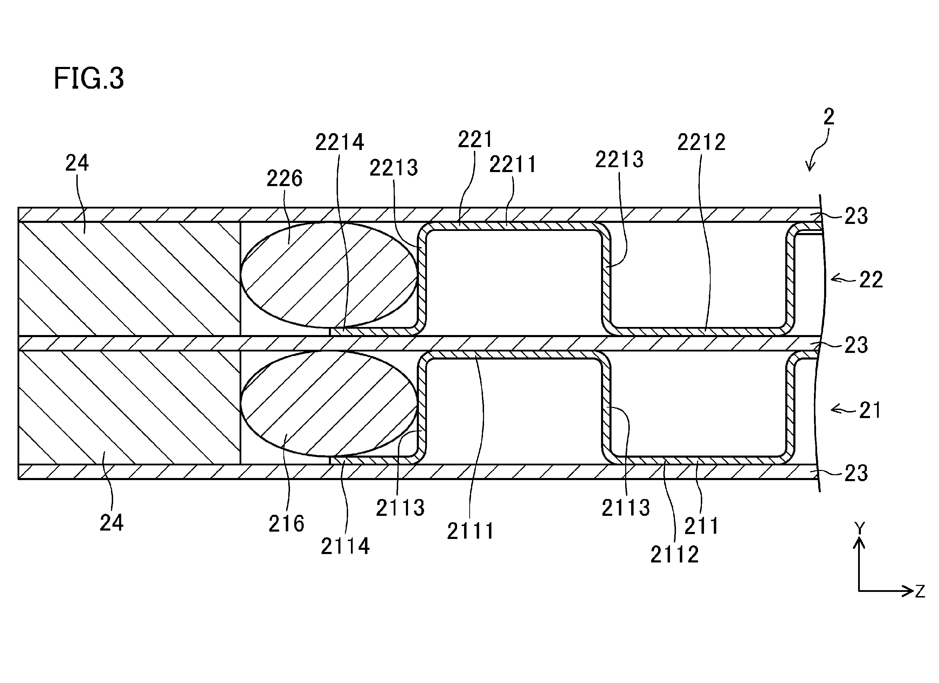

Subsequently, tube plates 23 and side bars 24, which have been separately provided, and the corrugated fins 211, 212, 213, 221, 222, 223 are stacked one upon the other in a predetermined order. At this time, as illustrated in FIG. 3, a spacer 216, 226 having a predetermined cross-sectional shape is inserted between each side bar 24 and the side wall 2113, 2213 of the first corrugated fin 211, 221 adjacent thereto. The spacer 216, 226 is a regulating member used to keep a predetermined interval between the side bar 24 and the side wall 2113, 2213 of the first corrugated fin 211, 221 adjacent thereto during brazing. The predetermined interval here corresponds to the interval allowing the insertion of the catalyst carrier 215, 225 in the example illustrated. Although the spacer 216, 226 has an elliptic cross-sectional shape in the example shown in FIG. 3, this is merely an example of the present disclosure, and the spacer 216, 226 may also have any other appropriate cross-sectional shape, such as a rectangular shape. The spacer 216, 226 is also made of a material that will not be brazed to the corrugated fins or any other members during the brazing process, and may be configured as a slim ceramic bar, for example.

The first corrugated fin 211, 221 is configured such that neither end thereof contacts with any side bar 24. The interval between the end of the first corrugated fin 211, 221 and the side bar 24 may be set to be an appropriate one.

Then, the tube plates 23, the side bars 24, and the corrugated fins 211, 212, 213, 221, 222, and 223 are brazed together. At this time, each end portion 2114, 2214 of the first corrugated fin 211, 221 is brazed to one of the tube plates 23 between its associated side bar 24 and the side wall 2113, 2213 of the first corrugated fin 211, 221 adjacent thereto. Thus, the core 2 is completed.

When the core 2 is completed, the spacers 216, 226 are removed, and catalyst carriers 215, 225 that have been separately provided are inserted into a channel defined between the side bar 24 and the side wall 2113, 2213 of the first corrugated fin 211, 221 adjacent thereto, and other channels defined between the side walls 2113, 2213 of the first corrugated fin 211, 221. Specifically, the catalyst carriers 215 in each first passage 21 are inserted one to one into the respective channels, which are open through a first fluid inflow surface 31 of the core 2 (i.e., the upper end face thereof), with the inflow surface 31 exposed before the attachment of a header tank 41. Likewise, the catalyst carriers 225 in each second passage 22 are inserted one to one into the respective channels, which are open through a second fluid inflow surface 33 of the core 2 (i.e., the lower end face thereof), with the inflow surface 33 exposed before the attachment of a header tank 43. In this manner, in the catalytic reactor 1 with this configuration, since the catalyst carriers 215, 225 are not fixed in the channels, the carriers are easily replaceable by removing the header tank 41, 43 attached to the core 2 to expose the inflow surfaces 31, 33 of the core 2.

After the insertion of the catalyst carriers 215 and 225, header tanks 41, 42, 43, and 44 are welded to the core 2. Thus, the catalytic reactor 1 is completed.

As can be seen, according to the catalytic reactor 1 with the above-described configuration, the end of the first corrugated fin 211, 221 in the Z direction, defining the catalyst insertion region, is defined by cutting the lower wall 2112, 2212 or the upper wall 2111, 2211 halfway, and a predetermined interval is left between the side bar 24 and the side wall 2113, 2213 of the corrugated fin 211, 221. Also, the end portion of the corrugated fin 211, 221 is brazed to the tube plate 23 between the side bar 24 and the side wall 2113, 2213 of the corrugated fin 211, 221 adjacent thereto. This enables the channel defined between the side bar 24 and the side wall 2113, 2213 of the corrugated fin 211, 221 to have a predetermined cross-sectional shape, thereby ensuring the insertion of the catalyst carrier 215, 225 into this channel. Thus, the catalyst carriers 215, 225 having a predetermined shape are inserted into all of the channels of the core 2. Consequently, the fluid passing through the core 2 is allowed to cause catalytic reactions reliably, thereby ensuring good performance for the catalytic reactor 1.

By using the spacer 216, 226 while making the core 2 by brazing, a predetermined interval is reliably provided between the side bar 24 and the side wall 2113, 2213 of the first corrugated fin 211, 221 adjacent thereto. In addition, the end portion 2114, 2214 of the first corrugated fin 211, 221 is reliably prevented from being caught in the gap between the side bar 24 and the tube plate 23.

Furthermore, since the end of the first corrugated fin 211, 221 is kept out of contact with the side bar 24 during brazing, the side bar 24 is reliably prevented from pressing the end portion 2114, 2214 of the first corrugated fin 211, 221 under the influence of heat. As a result, the end portion 2114, 2214 of the first corrugated fin 211, 221 is reliably brazed to the tube plate 23 between the side bar 24 and the side wall 2113, 2213 of the first corrugated fin 211, 221.

In this case, as long as the interval between the side bar 24 and the side wall 2113, 2213 of the first corrugated fin 211, 221 adjacent thereto is greater than or equal to a predetermined one, the catalyst carrier 215, 225 is insertable into the channel between them. However, if the interval is too wide, the strength of the core 2 will decrease, which is not beneficial. Specifically, the side walls 2113, 2213 of the first corrugated fin 211, 221, which are spaced at predetermined pitches in the Z direction and extend to connect the tube plates 23, 23 together in the stacking direction, function as members with a strength high enough to withstand the internal and external pressures in the core 2. For this reason, if the side wall 2113, 2213 of the first corrugated fin 211, 221 adjacent to the side bar 24 is significantly spaced from the side bar 24, the strength will decrease in this region.

Suppose while the interval between the side bar 24 and the side wall 2113, 2213 of the first corrugated fin 211, 221 adjacent thereto is increased, the cross-sectional area of the catalyst carrier 215 inserted between them decreases. In that case, the channel resistance of that channel becomes lower than that of any other channel. Such a difference in channel resistance between the channels of the core 2 causes a non-uniform flow, i.e., a situation where the flow rate of some of the channels becomes higher than that of the others. This may result in a decline in the performance of the catalytic reactor 1.

Thus, it is recommended that the interval between the side bar 24 and the side wall 2113, 2213 of the corrugated fin 211 be set within the range in which the strength of core 2 does not decrease, and be set according to the dimension of the catalyst carrier 215, 225 inserted into the channel between them. For example, the interval between the side bar 24 and the side wall 2113, 2213 of the first corrugated fin 211, 221 adjacent thereto may be set to be equal to the pitch between the side walls 2113, 2213 of the corrugated fin 211, 221 as illustrated in FIG. 2 and other drawings. This advantageously allows the catalyst carriers 215, 225 having the same dimensions to be inserted into all of the channels. Note that the interval between the side bar 24 and the side wall 2113, 2213 of the corrugated fin 211, 221 may be set to be greater or less than the pitch between the side walls 2113, 2213 of the corrugated fin 211, 221. In that case, however, to prevent a non-uniform flow from being produced in the core 2, it is recommended that a catalyst carrier having dimensions corresponding to the cross-sectional size of the channel between them be used as the catalyst carrier to be inserted into this channel.

Note that in some cases, no catalyst carriers 225 are inserted into the second passage 22, depending on the application of the catalytic reactor 1.

### INDUSTRIAL APPLICABILITY

As can be seen from the foregoing description, the catalytic reactor of the present disclosure is useful as a catalytic reactor in various processes, because a catalyst carrier is reliably inserted into a channel defined between a side bar and a vertical wall of a corrugated fin to provide a high-performance catalytic reactor.

### DESCRIPTION OF REFERENCE CHARACTERS

- 1: Catalytic Reactor
- 21: First Passage
- 211: First Corrugated Fin
- 2111: Upper Wall (Horizontal Wall)
- 2112: Lower Wall (Horizontal Wall)
- 2113: Side Wall (Vertical Wall)
- 2114: End Portion (of Corrugated Fin)
- 215: Catalyst Carrier
- 216: Spacer
- 22: Second Passage
- 221: First Corrugated Fin
- 2211: Upper Wall (Horizontal Wall)
- 2212: Lower Wall (Horizontal Wall)
- 2213: Side Wall (Vertical Wall)
- 2214: End Portion (of Corrugated Fin)
- 225: Catalyst Carrier
- 226: Spacer
- 23: Tube Plate
- 24: Side Bar

## Claims

1. A catalytic reactor comprising:
tube plates configured to face each other in a first direction with a predetermined gap left between themselves, and to define a passage where a fluid flows between themselves;
a corrugated fin brazed in the passage defined by the tube plates, and configured to partition the passage into a plurality of channels in a second direction orthogonal to the first direction;
a side bar brazed between the tube plates facing each other, and adjacent to an end portion of the corrugated fin in the second direction so as to constitute a side wall of the passage; and
catalyst carriers configured to be inserted into, and extend along, the plurality of channels defined by the corrugated fin, wherein
the corrugated fin includes horizontal walls brazed to the tube plates facing each other in the first direction, and vertical walls arranged in the second direction at predetermined equal pitches corresponding to a dimension of the catalyst carriers,
one end of the corrugated fin in the second direction is located halfway on one of the horizontal walls,
one of the vertical walls of the corrugated fin that is adjacent to the side bar is arranged to provide a space where one of the catalyst carriers is insertable between the side bar and that vertical wall of the corrugated fin, and
the end portion of the corrugated fin in the second direction is brazed to one of the tube plates between the side bar and that vertical wall of the corrugated fin.

2. The catalytic reactor of claim 1, wherein
an interval between the side bar and that vertical wall of the corrugated fin is set to be equal to the predetermined pitches of the corrugated fin, and a catalyst carrier having the same dimensions as the catalyst carriers inserted between the vertical walls of the corrugated fin is inserted between the side bar and that vertical wall of the corrugated fin.

3. A method for making a catalytic reactor, the method comprising steps of:
cutting, to a predetermined size, a corrugated fin, including horizontal walls and vertical walls, halfway on one of the horizontal walls;
sandwiching the corrugated fin thus cut between tube plates in a direction in which the horizontal walls are in contact with the tube plates, arranging a side bar between the tube plates so that the side bar is adjacent to one of the vertical walls in an end portion of the corrugated fin, and brazing the corrugated fin, the tube plates, and the side bar together;
interposing, during the step of brazing, a spacer between the side bar and one of the vertical walls of the corrugated fin that is adjacent to the side bar to provide a predetermined space between the side bar and the vertical wall; and
inserting, after the step of brazing, a catalyst carrier into a channel defined between the vertical walls of the corrugated fin, and also inserting another catalyst carrier into another channel which is defined between the side bar and that vertical wall of the corrugated fin and from which the spacer has been removed.

4. The method of claim 3, wherein
the brazing step is performed with the corrugated fin arranged such that an end of the corrugated fin is out of contact with the side bar.
